# FASCICULE DE BREVET EUROPEEN

(11) **EP 0 814 337 B1**
(45) Date de publication et mention de la délivrance du brevet: **09.01.2002**
(21) Numéro de dépôt: 97401305.4
(22) Date de dépôt: 10.06.1997
(51) Int. Cl.: G01P 1/08, G01C 23/00, B64D 43/00, G01D 7/06

(54) **Indicateur de vitesse horizontale pour aéronef à voilure tournante**
Horizontalgeschwindigkeitsanzeiger für Drehflügel-Luftfahrzeug
Horizontal velocity indicator for rotary wing aircraft

(30) Priorité: 21.06.1996 FR 9607739
(43) Date de publication de la demande: 29.12.1997
(73) Titulaire: EUROCOPTER, 13725 Marignane Cédex (FR)
(72) Inventeur: Berlioz, Raymond Jacques Gérard, 13300 Salon De Provence (FR); Saintagne, Vincent Frédéric, 13880 Velaux (FR)
(74) Mandataire: Bonnetat, Christian

(56) Documents cités:
- DE-A- 2 535 493
- US-A- 4 044 709
- S.SHELDON ET AL.: "The IntraFormation Positioning System - Providing Situational Awareness to SOF Air Crews" CONFERENCE ON ENHANCED AND SYNTHETIC VISION 8-10 APRIL 1996, ORLANDO, FL, US; SPIE-INTERNATIONAL SOCIETY FOR OPTICAL ENGINEERING, vol. 2736, 1996, US, pages 176-182, XP000618686

## Description

La présente invention concerne un indicateur de vitesse horizontale pour aéronef à voilure tournante, notamment un hélicoptère, utilisé lors d'évolutions omnidirectionnelles de l'aéronef.

De tels indicateurs sont généralement destinés à équiper des hélicoptères de recherche et de sauvetage pour le vol stationnaire notamment au-dessus de la mer ou encore pour la lutte anti-sous-marine. Pour cette raison, ils seront également dénommés ci-après, par extension, "indicateurs de vol stationnaire".

Jusqu'à présent, les indicateurs de vol stationnaire sont le plus souvent du type électromécanique. Ces indicateurs affichent la vitesse par rapport au sol (dite plus succinctement vitesse sol), ou vitesse horizontale, mesurée par exemple par un radar à effet Doppler. Cette vitesse est décomposée suivant les axes X-X et Y-Y de l'hélicoptère (où X-X représente l'axe longitudinal de l'appareil et Y-Y est orthogonal à X-X) et ses composantes Vx, Vy sont représentées chacune par une aiguille, les deux formant une sorte de réticule (deux aiguilles ou fils se croisant à angle droit).

Toutefois, de tels indicateurs présentent déjà un inconvénient dans la mesure où l'information qu'ils affichent peut s'interpréter de deux façons. En effet, dans un indicateur classique marqué d'une croix en son centre et où l'aiguille (fil) verticale se déplace latéralement pour indiquer une vitesse latérale et l'aiguille horizontale indique une vitesse longitudinale :
- soit le croisement des aiguilles figure l'extrémité du vecteur de vitesse sol, tandis que le centre de l'indicateur figure l'origine du vecteur (ou l'hélicoptère) ;
- soit, à l'inverse, le croisement des aiguilles représente la référence zéro de la vitesse sol.

On connaît également de tels indicateurs dits à écran qui reprennent le principe précédent mais peuvent représenter la vitesse sol actuelle sous forme de vecteur et non plus à l'aide d'aiguilles croisées. Dans ce cas, l'instrument est également représentatif de l'espace et peut visualiser l'objectif à atteindre (navire en détresse ou naufragé par exemple). A cet effet, des marques concentriques fixes, centrées sur un repère central figurant l'hélicoptère, indiquent à la fois des distances et des grandeurs de vitesse.

En outre, les logiques des visualisations par écran tendent à diverger de celles des indicateurs classiques. En effet, les représentations circulaires sont, d'une part, très encombrantes pour être transmises sur écran et, d'autre part, le déplacement d'un repère sur une échelle fixe n'est pas homogène avec la perception de l'environnement (dans ce sens, l'altimètre par exemple présente une logique d'organisation opposée à celle de l'horizon artificiel qui possède l'avantage d'une analogie instinctive). De ce fait, un indicateur du type précédent s'intègre mal dans une organisation conforme à celle de l'horizon artificiel où le véhicule est représenté fixe (pour le pilote) dans un environnement mouvant.

De plus, il apparaît que, pour ce dernier type d'indicateur, la vitesse actuelle affichée présente toujours, pour des raisons liées à son mode de détermination, un retard. Par ailleurs, avec des échelles fixes, les domaines de distance et de vitesse pouvant être affichés demeurent limités.

La présente invention a pour but d'éviter ces inconvénients.

A cet effet, l'indicateur de vitesse horizontale pour aéronef à voilure tournante, notamment un hélicoptère, utilisé lors d'évolutions omnidirectionnelles de l'aéronef, comprend :
- des premier et second capteurs de cap et de vitesse horizontale de l'aéronef, respectivement,
- des moyens de traitement des signaux fournis par lesdits premier et second capteurs, et
- des moyens d'affichage des signaux traités sur un écran de visualisation ces moyens étant caractérisés en ce qu' ils affichent:
   . un symbole matérialisant la position de l'aéronef, dont les prolongements désignent les axes longitudinal X-X et transversal Y-Y de l'aéronef,
   . une rose des caps mobile en rotation lorsque le cap de l'aéronef est modifié,
   . une échelle, représentative de la vitesse horizontale de l'aéronef, constituée d'un réticule et de cercles concentriques dont chacun représente une valeur de vitesse horizontale donnée et susceptible de se déplacer par rapport à la rose des caps, le défilement de ladite échelle dans la fenêtre formée par la rose des caps, avec les axes X-X et Y-Y et les axes dudit réticule demeurant respectivement parallèles, montrant, à chaque instant, la vitesse horizontale actuelle de l'aéronef.

Ainsi, une telle visualisation permet de garantir une totale cohérence avec les autres indicateurs du tableau de bord, notamment l'horizon artificiel. Par ailleurs, aucune limitation n'est imposée au champ des vitesses sol, en particulier pour la vitesse Vx dans l'axe longitudinal de l'appareil.

En particulier, ledit symbole matérialisant la position de l'aéronef peut être une croix épaisse.

Avantageusement, l'indicateur selon l'invention affiche de plus, sur l'écran de visualisation, un symbole de vitesse commandée, qui peut être une croix fine, représentant des consignes de vitesse longitudinale et latérale Vx et Vy. Ce symbole matérialise ainsi, en avance de phase, l'objectif qui sera atteint et évite une succession de dosages progressifs.

De préférence, la fenêtre de la rose des caps représente un espace circulaire plan de rayon réglable, où peut être matérialisée la position calculée d'un objectif à atteindre par l'aéronef, ou la direction dudit objectif.

Par ailleurs, sur l'écran de visualisation, peuvent être affichés un domaine de vitesse omnidirectionnel et/ou un symbole représentatif de l'intensité et de la direction du vent.

Les figures du dessin annexé feront bien comprendre comment l'invention peut être réalisée. Sur ces figures, des références identiques désignent des éléments semblables.

La figure 1 est une représentation schématique de l'indicateur de vitesse horizontale pour aéronef selon l'invention, montrant un exemple d'agencement de l'écran de visualisation de l'indicateur sur un écran de planche de bord d'un aéronef.

La figure 2 montre l'écran de visualisation de l'indicateur lorsque l'aéronef est en vol stationnaire.

La figure 3 montre l'écran de visualisation de l'indicateur pour un aéronef évoluant à une vitesse horizontale (relativement ) élevée.

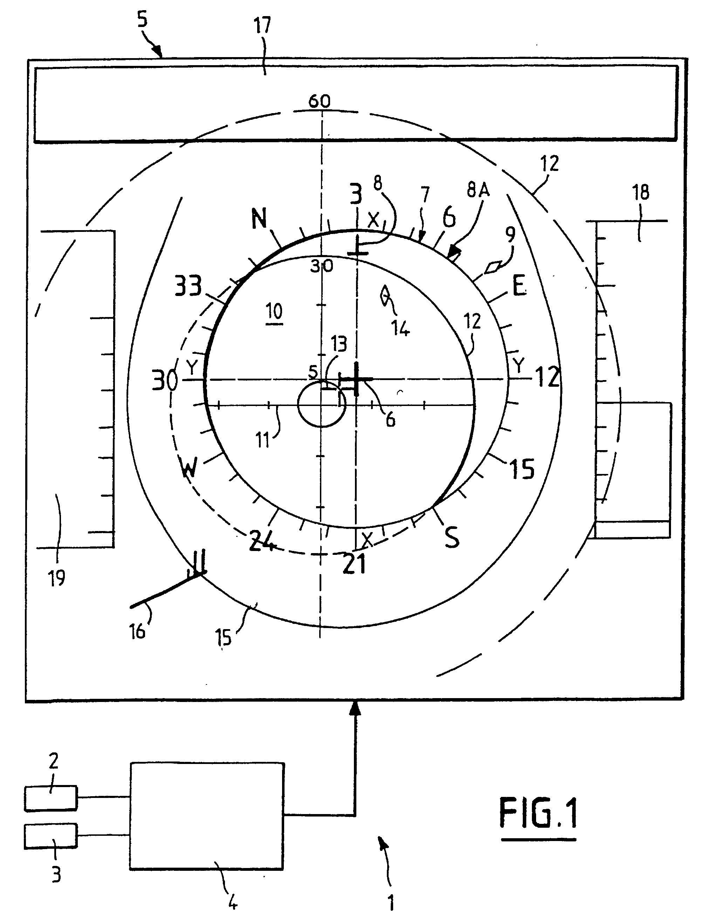

Sur la figure 1, on voit l'indicateur 1 de vitesse horizontale pour aéronef selon l'invention.

L'indicateur 1 comprend différents capteurs, en particulier, comme montré, le capteur de cap 2 et le capteur de vitesse horizontale 3, notamment un radar à effet Doppler. Ces capteurs 2, 3 fournissent leurs informations à un calculateur 4, qui peut être intégré au calculateur de pilotage de l'aéronef, lequel permet d'afficher, sur un écran de visualisation 5, les différentes informations traitées, et cela par l'intermédiaire d'un générateur de symboles (non représenté).

Plus précisément, sur l'écran de visualisation 5, sont affichées les différentes informations précitées à l'aide :
- d'un symbole matérialisant la position de l'aéronef, avantageusement une croix épaisse 6 (dont les prolongements désignent les axes longitudinal X-X et transversal Y-Y de l'aéronef),
- d'une rose des caps 7 mobile en rotation lorsque le cap de l'aéronef est modifié [on notera que, sur la figure 1, le cap actuel 8 (30°) est désigné par un T inversé, tandis que l'axe de la trajectoire (route réellement suivie), compte tenu de la vitesse sol et du vent, est désigné par un losange 9],
- d'une échelle 10, représentative de la vitesse horizontale de l'aéronef, constituée d'un réticule' 11 (dans ce contexte, le terme "réticule" désigne deux axes croisés à angle droit) et de cercles concentriques 12 dont chacun représente une valeur de vitesse horizontale donnée (par exemple, comme montré, 5, 30 et 60 noeuds, soit, respectivement, 9, 56 et 111km/h) et susceptible de se déplacer par rapport à la rose des caps 7, le défilement de l'échelle de vitesse 10 dans la fenêtre formée par la rose des caps, avec les axes X-X et Y-Y et les axes du réticule 11 demeurant respectivement parallèles, montrant, à chaque instant, la vitesse horizontale actuelle de l'aéronef, en valeur et "relèvement". Sur la figure 1, on a de plus noté par 8A le cap commandé.

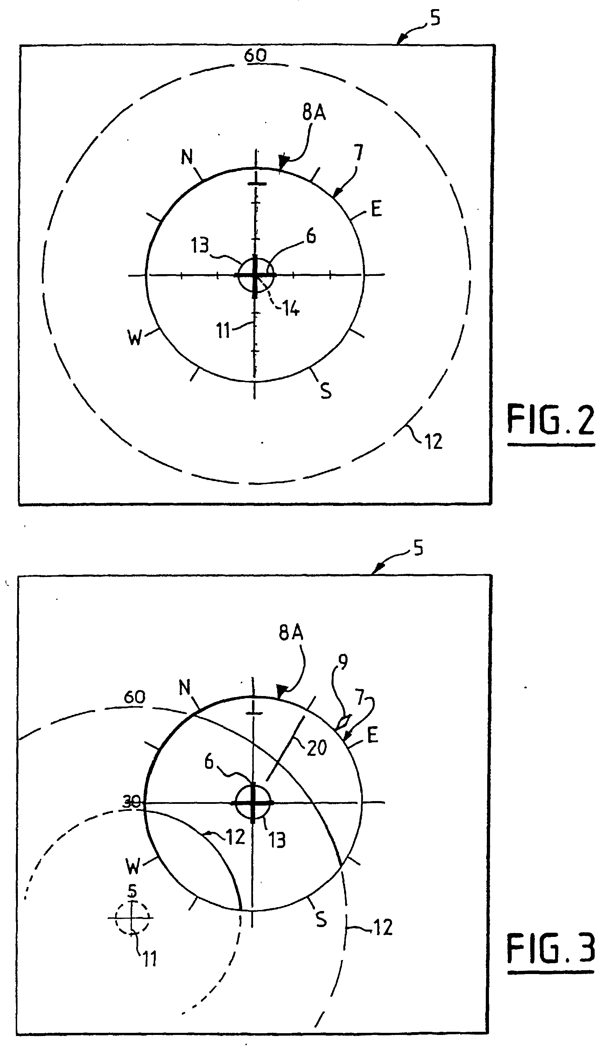

Par ailleurs, il est affiché, sur l'écran de visualisation 5, un symbole de vitesse commandée 13 (représenté à titre d'exemple par une croix fine sur la figure 1, par un cercle sur les figures 2 et 3).

Le symbole de vitesse commandée sert à donner de l'avance de phase au pilote pour alléger très fortement sa charge de travail. Il représente les consignes de vitesse Vx et Vy. Ce peut être un cercle, un point lumineux ou toute autre signalisation appropriée qui se déplace sur l'échelle de vitesses sol. Le pilote voit ainsi, instantanément, la consigne donnée que le pilote automatique stabilisera à terme. Une surveillance permanente n'est plus nécessaire et les ordres peuvent être retouchés en vérifiant visuellement, toujours instantanément, ce qui est ordonné.

Pour compléter, on précise que le radar à effet Doppler (vitesse actuelle) mesure des changements de fréquence. Les signaux émis sont modulés en fonction des réflexions par la vitesse avant, arrière, etc ... Les variations de fréquence reçues sont traduites en termes de vitesse. En présence d'un sol inégal, de vagues notamment, il se produit un retard de la vitesse sol.

Ainsi, lorsque le pilote agit sur le pilote automatique en manoeuvrant une molette, l'appareil accélère, si cela correspond à l'ordre donné, et, en fonction du retard précité, le pilote effectue un réglage en plus ou en moins pour atteindre la vitesse souhaitée, correspondant à une durée de quelques secondes. Cela résulte du fait que, sur un indicateur usuel, le pilote ne voit pas la vitesse commandée et que la vitesse sol est indiquée avec retard. L'affichage du symbole de vitesse commandée tel que décrit ci-dessus permet de supprimer cet inconvénient.

L'indicateur de vitesse horizontale selon l'invention, comme on le voit sur la figure 1, comprend donc une rose des caps 7 que l'opérateur peut considérer comme une fenêtre du plan horizontal à travers laquelle celui-ci voit l'échelle 10 des vitesses sol se déplacer en fonction des ordres fournis à l'aéronef. Par exemple, si l'aéronef se déplace vers l'avant et la droite, l'échelle des vitesses sol se déplacera vers l'arrière (vers le bas sur la figure) et la gauche.

En outre, la rose des caps 7 représente un espace circulaire plan dont l'opérateur peut choisir le rayon (par exemple un mille nautique) et dans lequel peut alors figurer la position calculée de l'objectif, matérialisée ici par un losange 14. On notera que cette position est indiquée au calculateur de pilotage 4 soit par ses coordonnées, repérées par exemple à l'aide d'une balise, soit par un passage de l'aéronef à la verticale de l'objectif. L'objectif reste ainsi visualisé lors des évolutions de l'aéronef pour revenir se mettre en vol stationnaire au-dessus de l'objectif ou approcher celui-ci sans l'avoir directement en vue.

Par ailleurs, comme montré, le domaine de vitesse omnidirectionnel 15 (vitesse air) peut être visualisé, ainsi qu'un symbole représentatif de l'intensité et de la direction du vent 16, afin d'éviter d'afficher des vitesses non axiales trop élevées. En effet, le pilote doit respecter des limites strictes de vitesse air latérales et arrière. L'instrument ne mesurant que des vitesses sol, il n'est juste que par vent nul ou, pour les vitesses latérales, à condition que le vent soit axial. De plus, en présence d'un vent de face, le pilote peut sous-estimer les possibilités de vitesses vers l'arrière. Le domaine de vitesse air est déterminé par des essais. Pour l'indicateur, le centre de son tracé subit une translation, correspondant au vent actuel, à partir de la référence zéro de l'échelle des vitesses sol.

Par ailleurs, différentes plages de l'écran de visualisation 5 peuvent être réservées pour l'affichage de différentes informations relatives notamment à la navigation de l'aéronef.

Ainsi, sur le bandeau 17, les informations suivantes peuvent être présentées, en source de navigation dite A.NAV :
- la route ou course souhaitée,
- le relèvement de la prochaine balise,
- le temps estimé pour rejoindre cette balise,
- la distance estimée à la balise,
- la vitesse de l'aéronef, estimée par le calculateur de navigation par rapport aux informations reçues de la balise.

De plus, il peut être affiché, à droite de la rose des caps 7 sur la figure 1, l'altimètre 18 avec, comme informations, la hauteur de vitesse de croisière que l'appareil doit rejoindre, la hauteur actuelle de l'appareil, et la hauteur de décision à l'approche de laquelle le pilote doit engager une certaine action, par exemple abaisser le train d'atterrissage, ainsi que, à gauche de la rose des caps 7, tout indicateur 19 utile à la navigation.

On notera en outre que la figure 2 illustre l'écran de visualisation 5 lorsque l'aéronef est en vol stationnaire (vitesse horizontale nulle) au-dessus de l'objectif 14.

La figure 3 montre quant à elle l'écran de visualisation 5 pour un aéronef évoluant à une vitesse horizontale (relativement ) élevée (de l'ordre dans cet exemple de 48 noeuds, soit 89 km/h) et cette vitesse horizontale est, dans ce cas, égale à la vitesse commandée (superposition des croix épaisse 6 et fine 13). On a supposé, sur cette figure, que l'objectif était en dehors de la fenêtre de la rose des caps : sa direction reste alors indiquée en 20.

La comparaison des figures 1 à 3 montre clairement le "défilement" de l'échelle des vitesses sol, lorsque la vitesse horizontale de l'aéronef varie.

Grâce à une telle visualisation sur écran, l'indicateur de l'invention permet d'assurer une complète cohérence avec les autres indicateurs du tableau de bord, dont notamment l'horizon artificiel, pour lesquels le véhicule (aéronef) est présenté fixe dans un environnement mouvant, avec des échelles mobiles devant un repère fixe, ce qui est conforme à la perception naturelle du pilote. Par ailleurs, la conception de l'indicateur permet de mettre en accord les deux "écoles de pilotage" citées dans l'introduction, à savoir le pilotage en vitesses sol et le pilotage en référence zéro des vitesses sol.

En outre, contrairement aux indicateurs usuels, ne permettant la visualisation des vitesses sol qu'entre 0 et environ 30 noeuds, soit 56 km/h (au-delà l'indicateur reste en butée), l'indicateur selon l'invention n'impose pas de limitation dans le champ des vitesses sol visualisées, en particulier pour la vitesse Vx dans l'axe longitudinal de l'appareil dont les limites en vol de translation vers l'avant sont naturellement beaucoup plus grandes que celles des vitesses arrière ou latérales (Vy).

## Revendications

1. Indicateur de vitesse horizontale pour aéronef à voilure tournante, notamment un hélicoptère, utilisé lors d'évolutions omnidirectionnelles de l'aéronef, comprenant :
- des premier (2) et second (3) capteurs de cap et de vitesse horizontale de l'aéronef, respectivement,
- des moyens de traitement (4) des signaux fournis par lesdits premier et second capteurs, et
- des moyens d'affichage des signaux traités sur un écran de visualisation (5), ces moyens étant **caractérisés en ce qu'**ils affichent:
. un symbole (6) matérialisant la position de l'aéronef, dont les prolongements désignent les axes longitudinal (X-X) et transversal (Y-Y) de l'aéronef,
. une rose des caps (7) mobile en rotation lorsque le cap de l'aéronef est modifié,
. une échelle (10), représentative de la vitesse horizontale de l'aéronef, constituée d'un réticule (11) et de cercles concentriques (12) dont chacun représente une valeur de vitesse horizontale donnée et susceptible de se déplacer par rapport à la rose des caps, le défilement de ladite échelle (10) dans la fenêtre formée par la rose des caps (7), avec les axes longitudinal (X-X) et transversal (Y-Y) et les axes dudit réticule (11) demeurant respectivement parallèles, montrant, à chaque instant, la vitesse horizontale actuelle de l'aéronef.

2. Indicateur selon la revendication 1,
**caractérisé en ce que** ledit symbole matérialisant la position de l'aéronef est une croix épaisse (6).

3. Indicateur selon la revendication 1 ou la revendication 2,
**caractérisé par** l'affichage, sur l'écran de visualisation (5), d'un symbole de vitesse commandée (13), représentant les consignes de vitesse longitudinale (Vx) et latérale ( Vy).

4. Indicateur selon la revendication 3,
**caractérisé en ce que** ledit symbole de vitesse commandé est une croix fine (13).

5. Indicateur selon l'une des revendications 1 à 4,
**caractérisé en ce que** la fenêtre de la rose des caps (7) représente un espace circulaire plan de rayon réglable, où peut être matérialisée la position calculée (14) d'un objectif à atteindre par l'aéronef.

6. Indicateur selon la revendication 5,
**caractérisé par** l'affichage, sur la fenêtre de la rose des caps, de la direction (20) de l'objectif à atteindre.

7. Indicateur selon l'une quelconque des revendications 1 à 6,
**caractérisé par** l'affichage, sur l'écran de visualisation (5), d'un domaine de vitesse omnidirectionnel (15).

8. Indicateur selon la revendication 7,
**caractérisé par** l'affichage d'un symbole (16) représentatif de l'intensité et de la direction du vent.

## Patentansprüche

1. Horizontalgeschwindigkeitsanzeiger für ein Drehflügel-Luftfahrzeug, insbesondere einen Hubschrauber, zur Verwendung während Allrichtungsbewegungen, der umfasst:
- einen ersten (2) und zweiten (3) Sensor für den Kurs bzw. die Horizontalgeschwindigkeit des Luftfahrzeugs,
- Mittel zur Verarbeitung (4) der durch den ersten und den zweiten Sensor gelieferten Signale und
- Mittel zur Darstellung der verarbeiteten Signale auf einem Bildschirm, wobei diese Mittel **dadurch gekennzeichnet sind, dass** sie darstellen:
. ein Symbol (6) zur Markierung der Position des Luftfahrzeugs, dessen Fortsätze die Longitudinalachse (X-X) und die Transversalachse (Y-Y) des Luftfahrzeugs bezeichnen,
. einen Kurskompass (7), der drehbar beweglich ausgebildet ist, wenn der Kurs des Luftfahrzeugs verändert wird,
. eine Skala (10), die die Horizontalgeschwindigkeit des Luftfahrzeugs darstellt und die aus einem Strichkreuz (11) und konzentrischen Kreisen (12) gebildet ist, von denen jeder einen Wert der gegebenen Horizontalgeschwindigkeit darstellt und geeignet ist, sich mit Bezug auf den Kurskompass zu verschieben, wobei der Lauf der Skala (10) in dem Fenster, das durch den Kurskompass (7) gebildet ist, in jedem Moment die aktuelle Horizontalgeschwindigkeit des Luftfahrzeugs zeigt, wobei die Longitudinalachse (X-X) und die Transversalachse (Y-Y) bzw. die Achsen des Strichkreuzes (11) parallel bleiben.

2. Anzeiger gemäß Anspruch 1, **dadurch gekennzeichnet, dass** das Symbol zur Markierung der Position des Luftfahrzeugs ein dickes Kreuz (6) ist.

3. Anzeiger gemäß Anspruch 1 oder 2 **gekennzeichnet durch** die Anzeige eines Symbols der eingestellten Geschwindigkeit (13) auf dem Bildschirm (5), das die Einstellungen der Longitudinalgeschwindigkeit (Vₓ) und der Lateralgeschwindigkeit (V_{Y}) darstellt.

4. Anzeiger gemäß Anspruch 3, **dadurch gekennzeichnet, dass** das Symbol der eingestellten Geschwindigkeit ein feines Kreuz (13) ist.

5. Anzeiger gemäß einem der Ansprüche 1 bis 4, **dadurch gekennzeichnet, dass** das Fenster des Kurskompasses (7) einen kreisförmigen ebenen Bereich mit regelbarem Radius darstellt, in dem die berechnete Position (14) eines vom Luftfahrzeug zu erreichenden Ziels markiert werden kann.

6. Anzeiger gemäß Anspruch 5 **gekennzeichnet durch** die Anzeige der Richtung (20) des zu erreichenden Ziels im Fenster des Kurskompasses.

7. Anzeiger gemäß einem der Ansprüche 1 bis 5 **gekennzeichnet durch** die Anzeige eines Bereichs der Allrichtungsgeschwindigkeit (15) auf dem Bildschirm (5).

8. Anzeiger gemäß Anspruch 7 **gekennzeichnet durch** die Anzeige eines Symbols (16), das die Windintensität und die Windrichtung darstellt.

## Claims

1. Horizontal speed indicator for a rotary-wing aircraft, especially a helicopter, used when the aircraft is moving in all directions, comprising:
- a first sensor (2) and a second sensor (3) for the heading and the horizontal speed of the aircraft, respectively,
- means (4) of processing the signals delivered by the said first sensor and the said second sensor, and
- means of displaying the processed signals on a display screen (5), these means being
**characterized in that** they display:
. a symbol (6) representing the position of the aircraft, the extensions of which symbol denote the longitudinal axis (X-X) and transverse axis (Y-Y) of the aircraft,
. a compass rose (7) which can rotate when the aircraft alters its heading,
. a scale (10) which represents the horizontal speed of the aircraft, the scale consisting of cross wires (11) and of concentric circles (12) each of which represents a given value of horizontal speed and which is capable of moving with respect to the compass rose, the travel of the said scale (10) in the window formed by the compass rose (7), with the longitudinal axis (X-X) and transverse axis (Y-Y) and the axes of said cross wires (11) remaining respectively parallel, showing the current horizontal speed of the aircraft at each moment.

2. Indicator according to Claim 1,
**characterized in that** the said symbol representing the position of the aircraft is a thick cross (6).

3. Indicator according to Claim 1 or Claim 2,
**characterized by** the display of a demanded-speed symbol (13) representing the longitudinal (Vx) and lateral (Vy) speed reference values on the display screen (5).

4. Indicator according to Claim 3,
**characterized in that** the said demanded-speed symbol is a thin cross (13).

5. Indicator according to one of Claims 1 to 4,
**characterized in that** the window in the compass rose (7) represents a flat circular space of adjustable radius, where the calculated position (14) of an objective to be reached by the aircraft can be represented.

6. Indicator according to Claim 5,
**characterized by** the display of the direction (20) in which the objective to be reached lies, in the window of the compass rose.

7. Indicator according to any one of Claims 1 to 6,
**characterized by** the display of a field of omnidirectional speed (15) on the display screen (5).

8. Indicator according to Claim 7,
**characterized by** the display of a symbol (16) representing the strength and direction of the wind.
